# EUROPÄISCHE PATENTSCHRIFT

(11) **EP 2 569 460 B1**
(45) Veröffentlichungstag und Bekanntmachung des Hinweises auf die Patenterteilung: **13.09.2017**
(21) Anmeldenummer: 11776325.0
(22) Anmeldetag: 05.05.2011
(51) Int. Cl.: C23C 24/04, F01D 11/12

(54) **VERFAHREN ZUR HERSTELLUNG EINES EINLAUFBELAGS EINER STRÖMUNGSMASCHINE**
METHOD OF PRODUCING AN ABRADABLE LINING OF A TURBOMACHINE
PROCÉDÉ DE FABRICATION D'UN REVÊTEMENT D'USURE D'UNE TURBOMACHINE

(30) Priorität: 08.05.2010 DE 102010019958
(43) Veröffentlichungstag der Anmeldung: 20.03.2013
(73) Patentinhaber: MTU Aero Engines AG, 80995 München (DE)
(72) Erfinder: WACHTER, Wolfgang, Cincinnati, Ohio 45209 (US)
(86) Internationale Anmeldenummer: PCT/DE2011/001034
(87) Internationale Veröffentlichungsnummer: WO 2011/141017

(56) Entgegenhaltungen:
- EP-A1- 2 088 224
- EP-A2- 2 063 072
- WO-A1-02/34967
- WO-A1-2010/097262
- US-A1- 2008 286 459
- US-B1- 6 702 553

## Beschreibung

### GEBIET DER ERFINDUNG

Bei thermischen Strömungsmaschinen, wie stationären Gasturbinen oder Flugtriebwerken, ist der Rotor mit den rotierenden Laufschaufeln durch ein feststehendes Gehäuse umschlossen. Entsprechend muss ein Spalt zwischen den Enden der Laufschaufeln und dem Gehäuse vorgesehen sein, der die Rotation des Rotors mit den Laufschaufeln ermöglicht. Allerdings soll der Spalt möglichst klein sein, um Leistungsverluste auf Grund des Durchströmens des Gases bzw. Fluids durch den Spalt zu vermeiden. Darüber hinaus kommt es durch Temperaturveränderungen und die entsprechende thermische Ausdehnung sowie durch die im Betrieb auftretenden Fliegkräfte zu Dimensionsveränderungen, die eine genaue Abstimmung bzw. Auslegung der Spaltgröße erschweren.

Aus diesem Grund ist es bekannt an den sich gegenseitig bewegenden Bauteilen, also den Laufschaufelspitzen und dem Gehäuse, entsprechende Beschichtungen vorzusehen. So wird üblicherweise an den Schaufelspitzen eine Panzerung aufgebracht, während am Gehäuse ein Einlaufbelag vorgesehen wird, der durch die Laufschaufeln abgetragen wird, um so eine optimale Einstellung des Spalts zu erzielen.

Die Einlaufbeläge müssen hierbei sehr komplexen Anforderungen genügen. So muss der Einlaufbelag ein optimiertes Abriebverhalten aufweisen, bei dem eine optimale Spanbildung und Entfernbarkeit des Abriebs gewährleistet ist. Außerdem darf das abgeriebene Material nicht auf die rotierenden Laufschaufeln übertragen werden und der Einlaufbelag sollte einen niedrigen Reibwiderstand aufweisen. Darüber hinaus darf sich der Einlaufbelag beim Anstreifen durch die rotierenden Laufschaufeln nicht entzünden. Weitere Anforderungen gibt es hinsichtlich der Korrosionsbeständigkeit, Temperaturbeständigkeit, Thermowechselbeständigkeit, Korrosionsbeständigkeit etc.

Entsprechend gibt es bereits eine Vielzahl von Vorschlägen für die Zusammensetzung und den Aufbau entsprechender Einlaufbeläge (vgl. EP 2 063 072 A oder WO 03/104511 A). Ein Beispiel ist in der WO 03/104511 A2 gegeben. Dort wird eine Zusammensetzung für das thermische Spritzen angegeben, die für eine abreibbare Dichtung bei Gasturbinen eingesetzt werden kann. Die thermisch spritzbare Zusammensetzung umfasst neben einer Metallmatrix einen Schmierstoff, wie z.B. Graphit, und einen keramischen Bestandteil. Darüber hinaus ist offenbart, dass ein Polymer mit abgeschieden werden kann, welches ausgebrannt oder ausgelaugt werden kann, um Poren in der abgeschiedenen Dichtung zu erzeugen.

Allerdings ist dieses Verfahren insofern nachteilhaft als lediglich bestimmte Polymere eingesetzt werden können, die einerseits thermisch verspritzt und andererseits aus der abgeschiedenen Schicht wieder herausgelöst werden können. Darüber hinaus besteht das Problem, dass beispielsweise bei der Verwendung von Graphit als Schmierstoff der Graphit beim thermischen Spritzen verbrennen kann, so dass die gewünschten mechanischen Eigenschaften des Einlaufbelags nicht erreicht werden, da nicht ausreichend Graphit abgeschieden worden ist.

### OFFENBARUNG DER ERFINDUNG

### AUFGABE DER ERFINDUNG

Es ist deshalb Aufgabe der vorliegenden Erfindung ein Verfahren zur Herstellung eines Einlaufbelags auf einem Bauteil einer Strömungsmaschine, wie beispielsweise einer Gasturbine, insbesondere eines Flugtriebwerks, sowie einen entsprechend hergestellten Einlaufbelag bereitzustellen, welche die Nachteile des Standes der Technik vermeiden und insbesondere eine einfache Herstellung des Einlaufbelags gewährleisten sowie gleichzeitig sicher garantieren, dass der Einlaufbelag den komplexen Anforderungen gerecht werdende Eigenschaften aufweist.

### TECHNISCHE LÖSUNG

Diese Aufgabe wird gelöst durch ein Verfahren zur Herstellung eines Einlaufbelags an einem Bauteil einer Strömungsmaschine mit den Merkmalen des Anspruchs 1. Vorteilhafte Ausgestaltungen sind Gegenstand des abhängigen Anspruchs 2. Die Erfindung zeichnet sich dadurch aus, dass der Einlaufbelag an einem Bauteil einer Strömungsmaschine, insbesondere einer Gasturbine und vorzugsweise einem Flugtriebwerk durch kinetisches Kaltgasspritzen abgeschieden wird. Beim kinetischen Kaltgasspritzen können Beschichtungen mit mehreren Bestandteilen abgeschieden werden, ohne dass die Bestandteile aufgeschmolzen oder angeschmolzen werden müssen, so dass sich eine große Variabilität bzgl. der Nutzung der möglichen Werkstoffe ergibt. Entsprechend kann für einen erfindungsgemäßen Einlaufbelag eine Schicht abgeschieden werden, die einen Matrixwerkstoff umfasst sowie mindestens eine in den Matrixwerkstoff eingelagerte Komponente. Der Matrixwerkstoff ist eine Legierung auf Basis von MCrAlX mit M=Ni, Co, Fe und X= Y, Hf, Si oder Mischungen dieser Bestandteile. Der zweite Bestandteil des Einlaufbelags, also eine erste im Matrixwerkstoff eingelagerte Komponente, ist ein aus der Matrix durch Auflösen in einem Lösemittel heraus lösbarer Werkstoff. Durch die niedrige Temperatur, die beim Kaltgasspritzen eingesetzt werden kann, und die hohe Auftreffgeschwindigkeit der Partikel auf der zu beschichtenden Oberfläche können eine Vielzahl von Werkstoffen eingesetzt werden, da die Temperaturbelastung niedrig ist und die Haftung der Partikel auf dem Substrat auf Grund der hohen Auftreffgeschwindigkeit hoch ist. Entsprechend ist die Auswahl für einen aus dem Matrixwerkstoff heraus lösbaren Stoff entsprechend groß und es können einfach verarbeitbare Materialien eingesetzt werden. Die Porosität des Einlaufbelags wird vorzugsweise über die Größe und/oder Menge des Zuschlagstoffs und die Spritzparameter eingestellt. Diese erste im Matrixwerkstoff eingelagerte Komponente ist die wasserlösliche Legierung Al20Sn, die in einfacher Weise mit Wasser aus dem Matrixwerkstoff wieder herausgelöst werden kann. Dadurch kann in einfacher Weise eine poröse Struktur gebildet werden, die die erforderlichen mechanischen Eigenschaften für den Einlaufbelag gewährleistet. Da die Abscheidung des Werkstoffs, an dessen Stelschaften für den Einlaufbelag gewährleistet. Da die Abscheidung des Werkstoffs, an dessen Stelle nach dem Herauslösen die Poren gebildet sind, genauso einfach möglich ist wie das Herauslösen des entsprechenden Werkstoffs aus der Matrix, kann viel genauer und zielgerichteter die Porosität in dem abgeschiedenen Einlaufbelag eingestellt werden, so dass bereits zufriedenstellende Einlaufbeläge ohne zusätzliche weitere Werkstoffkomponenten im Einlaufbelag hergestellt werden können. Entsprechend kann mit der vorliegenden Erfindung ein Einlaufbelag hergestellt werden, der lediglich aus einem einzigen Grundwerkstoff gebildet ist, wie beispielsweise einer Nickellegierung und eine entsprechende poröse Struktur aufweist, welche die erforderlichen mechanischen Eigenschaften, wie leichte Abreibbarkeit gewährleistet.

Zusätzlich wird auch eine zweite im Matrixwerkstoff eingelagerte Komponente als Zuschlagsstoff abgeschieden, welche durch einen Werkstoff gebildet ist, der leicht abreibbar ist und somit eine geringe Scherfestigkeit aufweist. Mit dem Zuschlagsstoff können nämlich ebenfalls die mechanischen Eigenschaften des Einlaufbelags variiert und somit eingestellt werden, da entsprechende Zuschlagsstoffe gewählt werden können, die ein leichtes Abreiben ermöglichen, wie beispielsweise verschiedene Gesteine oder Mineralien, keramische Stoffe, Polymere oder sonstige organische Stoffe. Insbesondere kann die zweite im Matrixwerkstoff eingelagerte Komponente durch Graphit, Polyester, Bentonit oder hexagonales Bonitrid gebildet sein.

Wie bereits erwähnt, ist diese zweite in dem Matrixwerkstoff eingelagerte Komponente zusätzlich zu der durch die auflösbare Werkstoffkomponente gebildeten Porenstruktur vorgesehen. Darüber hinaus können natürlich weitere Komponenten bzw. Zuschlagsstoffe vorgesehen sein, so dass insgesamt die Eigenschaften des Einlaufbelags gezielt eingestellt werden können. Hierzu bietet das Kaltgasspritzen eine einfache Möglichkeit, da die verschiedenen Komponenten des Einlaufbelags als separate, sortenreine Pulver oder als Pulvergemische zusammen oder getrennt in die Kaltgasspritzvorrichtung zugeführt werden können. Darüber hinaus ist es auch denkbar Pulver des bereits fertig hergestellten Verbundwerkstoffs zu verspritzen.
Durch das erfindungsgemäße Verfahren können Einlaufbeläge auf Bauteilen einer Strömungsmaschine hergestellt werden, welche lediglich einen Matrixwerkstoff ohne zusätzliche Werkstoffkomponenten umfassen, wobei zur Einstellung der mechanischen Eigenschaften des Einlaufbelags eine entsprechende Porenstruktur ausgebildet ist. Allerdings kann es sich bei der Werkstoffmatrix nicht nur um einen homogenen Matrixwerkstoff handeln, sondern auch um einen Matrixwerkstoff, der inhärent nicht-homogene Gefügebestandteilen umfasst.

Einlaufbeläge, die nach dem erfindungsgemäßen Verfahren hergestellt worden sind, weisen als Folge davon Restbestandteile des heraus gelösten Werkstoffs in einer offenen Porenstruktur oder in vollständig vom Matrixwerkstoff umschlossenen Hohlräumen auf.

### KURZE BESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in
Figur 1 eine Darstellung einer ersten Ausführungsform zur Herstellung eines mit dem erfindungsgemäßen Verfahren hergestellten Einlaufbelags;
Figur 2 eine Schnittansicht durch ein Bauteil mit einem ersten Einlaufbelag;
Figur 3 eine Schnittansicht durch eine weitere Ausführungsform eines Bauteils;
Figur 4 eine Darstellung der Herstellung eines mit dem erfindungsgemäßen Verfahren hergestellten Einlaufbelags in einer weiteren Ausführungsform; und in
Figur 5 eine Schnittansicht durch ein Bauteil mit einer weiteren Ausführungsform eines Einlaufbelags.

### AUSFÜHRUNGSBEISPIELE

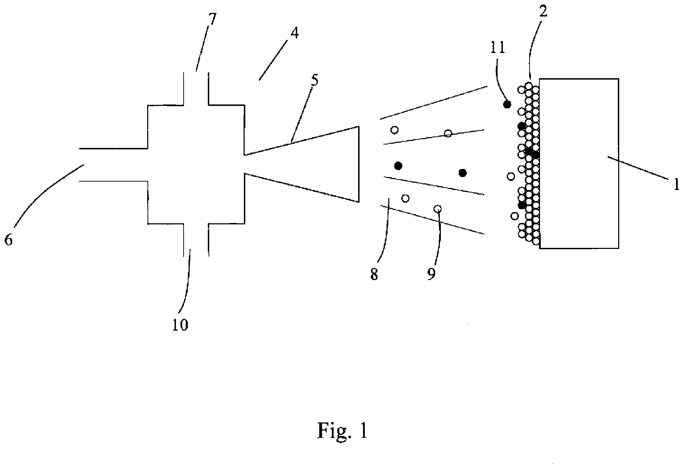

Die Figur 1 zeigt in einer schematischen Darstellung die Abscheidung eines erfindungsgemäß hergestellten Einlaufbelags 2 auf einem Bauteil 1 mittels kinetischen Kaltgasspritzens. Hierzu ist eine Kaltgasspritzvorrichtung 4 vorgesehen, welche eine Gaszufuhr 6 aufweist, über die ein Trägergas zugeführt wird, welches zum Transport der abzuscheidenden Pulverpartikel auf die Oberfläche des Bauteils 1 dient. Das Trägergas 6 wird von einer Gaszuführeinrichtung (nicht gezeigt) mit hohem Druck und hoher Geschwindigkeit in die Kaltgasspritzvorrichtung 4 eingeführt, wo es über eine Düsenanordnung, z.B. eine Lavai-Düse 5 mit sehr hoher Geschwindigkeit im Bereich der Schallgeschwindigkeit, vorzugsweise mit Überschallgeschwindigkeit, austritt und in Richtung der zu beschichtenden Oberfläche des Bauteils 1 strömt (Spritzstrahl 8). In der Kaltgasspritzvorrichtung 4 ist zudem eine Pulverzuführung 7 vorgesehen, über die ein zu beschichtender Werkstoff in Form eines Pulvers zugeführt werden kann, so dass er mit dem Trägergas die Kaltgasspritzvorrichtung 4 über die Laval-Düse 5 verlässt und auf dem Bauteil 1 abgeschieden werden kann.

Bei der in Figur 1 gezeigten Kaltgasspritzvorrichtung 4 ist eine weitere Pulverzuführung 10 vorgesehen, über die ein weiterer Beschichtungswerkstoff zugeführt werden kann. Entsprechend kommt es bei dieser Ausführungsform erst in der Kaltgasspritzvorrichtung 4 zu einer Vermischung der über die Pulverzuführungen 7 und 10 zugeführten Werkstoffe. Alternativ könnte auch über eine der Pulverzuführungen 7, 10 ein Pulvergemisch oder ein Pulver eines Verbundwerkstoffs zugeführt werden.

Bei der in der Figur 1 dargestellten Ausführungsform der vorliegenden Erfindung wird durch die Pulverzuführung 7 Pulver des Matrixwerkstoffs des Einlaufbelags zugeführt, welches im Spritzstrahl 8 in Form der Partikel 9 dargestellt ist.

Über die Pulverzuführung 10 wird eine in den Matrixwerkstoff einzulagernde Komponente zugeführt, nämlich in dem vorliegenden Fall der wasserlösliche Werkstoff Al20Sn. Die Al20Sn-Partikel sind im Spritzstrahl 8 mit dem Bezugszeichen 11 bezeichnet.

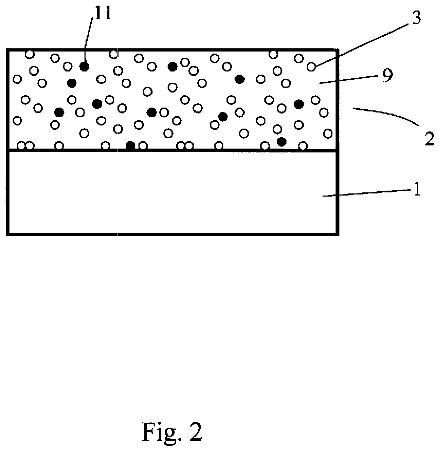

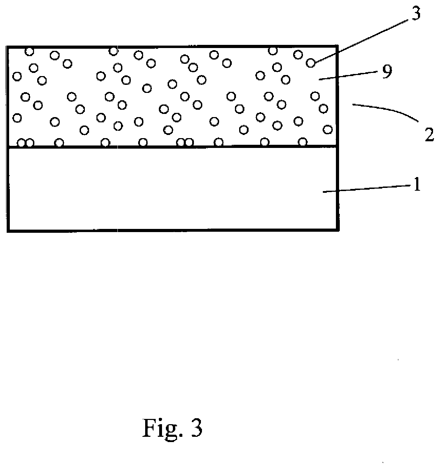

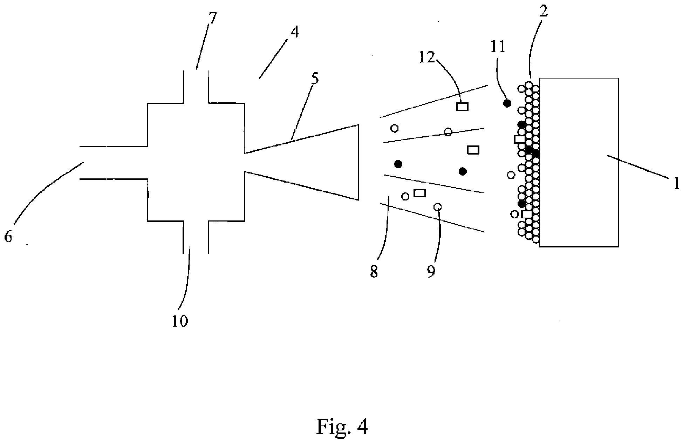

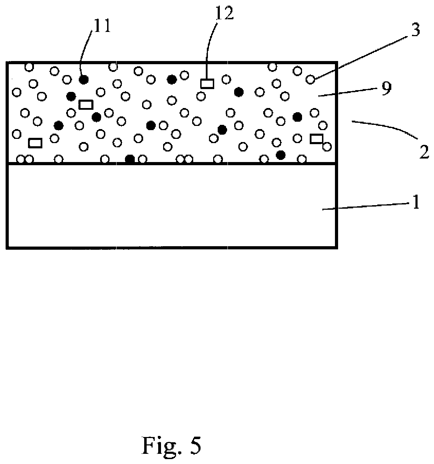

Die mit hoher Geschwindigkeit auf das Bauteil 1 beschleunigten Matrixpartikel 9, beispielsweise Nickel bzw. Nickellegierungs-Partikel, und die Partikel 11 der Einlagerungskomponente, also Al20Sn werden auf dem Bauteil 1 abgeschieden, wobei durch die hohe Auftreffgeschwindigkeit der Partikel beim Kaltgasspritzen eine Verformung der Partikel 9, 11 und / oder der Bauteiloberfläche stattfindet, so dass eine dichte, gut haftende Schicht 2 als Einlaufbelag auf dem Bauteil 1 ausgebildet wird. Da beim Kaltgasspritzen die verspritzten Pulverpartikel 9, 11 nicht aufgeschmolzen werden, liegen die Partikel in der Schicht 2 (Einlaufbelag) als separate Phasen vor. Entsprechend kann nach der Abscheidung der Schicht 2 auf dem Bauteil 1 zumindest ein Teil der wasserlöslichen Komponente, also die Partikel 11 aus der Schicht 2 herausgelöst werden, so dass eine entsprechend poröse Struktur ausgebildet wird. Dies ist in der Schnittdarstellung der Figur 2 durch das Bauteil 1 mit der darauf abgeschiedenen Schicht 2 zu sehen. Der Matrixwerkstoff 9 umschließt die Poren 3, die durch das Herauslösen der wasserlöslichen Legierung 11 entstanden sind. Allerdings sind bei dem gezeigten Ausführungsbeispiel nicht sämtliche Partikel 11 der wasserlöslichen Legierung aus der Schicht 2 herausgespült, so dass noch Reste der wasserlöslichen Legierung 11 verbleiben. Dies trifft insbesondere für Partikel 11 zu, die vollständig umschlossen in dem Matrixwerkstoff 9 aufgenommen sind. Dagegen können durch ein Auswaschen mit Wasser die Al20Sn-Partikel 11, die an der Oberfläche der Schicht 2 oder über andere Al20Sn-Partikel 11 in Verbindung mit der Oberfläche der Schicht 2 stehen, aus dem Werkstoff herausgelöst werden, so dass sich eine Porenstruktur mit Poren 3 ergibt. Je höher der Anteil der wasserlöslichen Legierung 11 in der Schicht 2 ist, desto größer ist die Wahrscheinlichkeit, dass ein durchgehendes Netzwerk der wasserlöslichen Legierung in der Schicht 2 gebildet wird, so dass die wasserlöslichen Partikel 11 vollständig aus der Schicht herausgelöst werden können. Dies ist in der Figur 3 dargestellt, bei der der Einlaufbelag 2 lediglich aus dem Matrixwerkstoff 9 und den entsprechenden Poren 3 gebildet ist. Lediglich Reste der wasserlöslichen Legierung können in den entsprechenden Poren 3 zurückgeblieben sein. Zudem umfasst der Einlaufbelag 2 auf dem Bauteil 1 weitere Komponenten, wie beispielsweise Festschmierstoffe oder allgemein Werkstoffe, die leicht abreibbar sind bzw. eine geringe Scherfestigkeit besitzen. Zu diesem Zweck wird beim Aufbringen des Einlaufbelags 2 auf dem Bauteil 1 beim Kaltgasspritzen ein zusätzliches Pulver bzw. ein Pulver mit einer zusätzlichen Komponente verwendet, wie in der Figur 4 schematisch dargestellt. Die zusätzliche Komponente 12 kann beispielsweise dem Pulver zugemischt werden, welches über die Pulverzuführung 7 oder die Pulverzuführung 10 in die Kaltgasspritzvorrichtung 4 eingeleitet wird. Entsprechend umfasst der abgeschiedene Einlaufbelag 2 gemäß der schematischen Darstellung der Figur 5 neben den Poren 3 und der wasserlöslichen Legierung 11 bzw. den entsprechenden Resten davon den Zuschlagswerkstoff 12 als zusätzliche Komponente. Der Zuschlagswerkstoff dient zur Einstellung der mechanischen Eigenschaften des Einlaufbelags 2 zusätzlich zur Einstellmöglichkeit über die erzielbare Porosität. Insbesondere wenn der Anteil der Poren 3 im Einlaufbelags 2 bereits einen derart großen Anteil am Schichtvolumen einnimmt, dass die grundsätzliche mechanischen Stabilität des Einlaufbelags 2 beeinträchtigt wird, können in den Matrixwerkstoff 9 die entsprechenden Zuschlagswerkstoffe 12 eingelagert werden, um die gewünschte Festigkeit und / oder Härte des Einlaufbelags 2 einzustellen. Entsprechend können an Stelle eines zusätzlichen Zuschlagswerkstoffs auch mehrere unterschiedliche Zuschlagswerkstoffe mit in die Schicht 2 des Einlaufbelags eingebaut werden.

**Größen der Pulver:**

| | |
|---|---|
| Matrixwerkstoff: | <32 µm |
| Löslicher Zuschlag: | ≤150 µm |
| Festschmierstoff: | ≤150 µm |

Darüber hinaus ist es auch möglich die Zusammensetzung des Einlaufbelags über die Schichtdicke zu variieren, in dem während des Abscheidens die Zusammensetzung der zugeführten Pulver bzw. die Menge der zugeführten Pulver variiert wird.

Durch die Verwendung des Kaltgasspritzens können die gewünschten Eigenschaften des Einlaufbelags zuverlässig und in einfacher Weise mit hoher Genauigkeit eingestellt werden. Durch die niedrige Prozesstemperatur mit Vermeidung des Aufschmelzens der abgeschiedenen Partikel kann eine Vielzahl unterschiedlicher Werkstoffe eingesetzt werden, so dass neben dem beschriebenen A120Sn auch andere wasserlösliche Legierungen bzw. auflösbare oder aufschmelzbare Werkstoffe eingesetzt werden können, die bisher einer Verwendung in einem Einlaufbelag nicht zugänglich waren.

Obwohl die vorliegende Erfindung anhand der beigefügten Ausführungsbeispiele detailliert beschrieben worden ist, so ist für den Fachmann selbstverständlich, dass die Erfindung nicht auf diese Ausführungsformen beschränkt ist, sondern dass vielmehr Abwandlungen in der Weise möglich sind, dass einzelne Merkmale weggelassen oder andersartige Kombinationen der vorgestellten Merkmale vorgenommen werden ohne den Schutzbereich der beigefügten Ansprüche zu verlassen. Die vorliegende Erfindung umfasst insbesondere sämtliche Kombinationen aller vorgestellten Merkmale.

## Patentansprüche

1. Verfahren zur Herstellung eines Einlaufbelags (2) an einem Bauteil (1) einer Strömungsmaschine, wobei der Einlaufbelag durch ein Spritzverfahren auf das Bauteil aufgebracht wird und der zu verspritzende Werkstoff zur Abscheidung des Einlaufbelags einen Matrixwerkstoff (9) und mindestens eine erste und eine zweite in den Matrixwerkstoff (9) eingelagerte Komponente (11, 12) umfasst, wobei
- der Einlaufbelag (2) durch kinetisches Kaltgasspritzen abgeschieden wird,
- der Matrixwerkstoff (9) eine Legierung auf Basis von MCrAlX mit
M = Ni, Co, Fe und
X = Y, Hf, Si
oder Mischungen dieser Bestandteile umfasst,
- die mindestens erste im Matrixwerkstoff (9) eingelagerte Komponente (11) die wasserlösliche Legierung Al₂₀Sn ist und nach der Abscheidung aus dem Matrixwerkstoff (9) zur Bildung einer Porenstruktur (3) zumindest teilweise herausgelöst wird und
- die mindestens zweite im Matrixwerkstoff (9) eingelagerte Komponente (12) ein Zuschlagstoff zur Anpassung der mechanischen Eigenschaften ist und durch einen Werkstoff gebildet ist, der eine geringe Scherfestigkeit aufweist, wobei
- die zweite im Matrixwerkstoff (9) eingelagerte Komponente (12) eine Metallummantelung aufweist und/oder
- die zweite im Matrixwerkstoff (9) eingelagerte Komponente (12) ein Gestein, ein Polymer, ein keramischer Stoff oder ein organischer Stoff ist,
- wobei der Matrixwerkstoff (9) und die Komponenten (11, 12)
- als separate, sortenreine Pulver zusammen oder getrennt oder - als Pulver eines bereits fertig hergestellten Verbundwerkstoffs der Kaltgasspritzvorrichtung zugeführt werden.

2. Verfahren nach Aspruch 1, wobei dass die zweite im Matrixwerkstoff (9) eingelagerte Komponente (12) ausgewählt ist aus der Gruppe, die Graphit, Polyester, Bentonit und hexagonales Bornitrid umfasst.

## Claims

1. Method for producing an abradable lining (2) on a component (1) of a turbomachine, wherein the abradable lining is applied to the component by a spray process, and the material to be sprayed comprises a matrix material (9) and at least a first and a second component (11, 12) embedded into the matrix material (9) for precipitating the abradable lining,
wherein
- the abradable lining (2) is precipitated by kinetic cold spraying;
- the matrix material (9) comprises an alloy on the basis of MCrAlX with
M = Ni, Co, Fe, and
X = Y, Hf, Si,
or mixtures of these components;
- the at least first component (11) embedded in the matrix material (9) is the water-soluble alloy Al₂₀Sn, and after precipitation from the matrix material (9) is removed at least to some extent for forming a pore structure (3), and
- the at least second component (12) embedded in the matrix material (9) is an aggregate for adjusting the mechanical properties and formed by a material which has a low shearing resistance, wherein
- the second component (12) embedded in the matrix material (9) has a metal sheath and/or
- the second component (12) embedded in the matrix material (9) is a stone, a polymer, a ceramic material, or an organic material;
- wherein the matrix material (9) and the components (11, 12)
- are added together or separately as separate, single-variety powders, or as a powder of an already prefabricated composite material of the cold spraying device.

2. Method according to claim 1, wherein the second component (12) embedded in the matrix material (9) is selected from the group that comprises graphite, polyester, bentonite, and hexagonal boron nitride.

## Revendications

1. Procédé de fabrication d'un revêtement d'usure (2) sur un composant (1) d'une turbomachine, dans lequel le revêtement d'usure est appliqué par un procédé de pulvérisation sur le composant et le matériau à pulvériser pour déposer le revêtement d'usure comprend un matériau matrice (9) et au moins un premier et un second composant (11, 12) dispersés dans le matériau matrice (9),
dans lequel :
- le revêtement d'usure (2) est déposé par pulvérisation cinétique à gaz froid,
- le matériau matrice (9) comprend un alliage à base de MCrAlX avec :
M = Ni, Co, Fe et
X = Y, Hf, Si
ou des mélanges de ces composants,
- le au moins un premier composant (11) dispersé dans le matériau matrice (9) est l'alliage hydrosoluble Al₂₀Sn et est dissous au moins en partie après le dépôt du matériau matrice (9) pour former une structure poreuse (3) et
- le au moins un second composant (12) dispersé dans le matériau matrice (9) est une substance d'appoint permettant d'adapter les propriétés mécaniques et est formé d'un matériau qui présente une résistance au cisaillement faible, dans lequel :
- le second composant (12) dispersé dans le matériau matrice (9) présente une gainage métallique et/ou
- le second composant (12) dispersé dans le matériau matrice (9) est une roche, un polymère, une substance céramique ou une substance organique,
- dans lequel le matériau matrice (9) et les composants (11, 12)
- son acheminés au dispositif de pulvérisation à gaz froid sous la forme d'une poudre pure séparée conjointement ou séparément ou sous la forme d'une poudre d'un matériau composite déjà fabriqué à l'avance.

2. Procédé selon la revendication 1, dans lequel le second composant (12) dispersé dans le matériau matrice (9) est choisi dans le groupe qui comprend le graphite, un polyester, la bentonite et du nitrure de bore hexagonal.
